Europäisches Patentamt

European Patent Office

Office européen des brevets

(11) Publication number: **0 098 665**
**A2**

# EUROPEAN PATENT APPLICATION

(21) Application number: **83200994.8**

(22) Date of filing: **05.07.83**

(51) Int. Cl.³: **H 04 L 27/14**

(30) Priority: **07.07.82  GB 8219631**

(43) Date of publication of application: **18.01.84**
**Bulletin 84/3**

(84) Designated Contracting States: **BE CH DE FR GB IT LI**

(71) Applicant: **PHILIPS ELECTRONIC AND ASSOCIATED INDUSTRIES LIMITED, Arundel Great Court 8 Arundel Street, London WC2R 3DT (GB)**

(84) Designated Contracting States: **GB**

(71) Applicant: **N.V. Philips' Gloeilampenfabrieken, Groenewoudseweg 1, NL-5621 BA Eindhoven (NL)**

(84) Designated Contracting States: **BE CH DE FR IT LI**

(72) Inventor: **Marshall, Christopher Brian, C/O PHILIPS RESEARCH LABORATORIES, Redhill Surrey RH1 5HA (GB)**

(74) Representative: **Moody, Colin James et al, Philips Electronic and Associated Industries Limited Patent Department Mullard House Torrington Place, London WC1E 7HD (GB)**

(54) **Data demodulator for a direct frequency modulated signal.**

(57) A data demodulator for a direct frequency modulated signals such as an FSK signal used in quasi-synchronous signalling systems for example paging systems.

The data demodulator comprises means (12 to 28) providing a positive frequency filter and a negative frequency filter. The filters each have a pass band that includes the modulus of the deviation frequency ($\triangle$f) and providing outputs (A', B', C and D) with two different phases for the positive frequency and two different phases for the negative frequency. The demodulator further includes means (32 to 52) for comparing the signal strength in the outputs of the positive and negative frequency filters to provide a data output.

0098665

"DATA DEMODULATOR FOR A DIRECT FREQUENCY MODULATED SIGNAL."

The present invention relates to a data demodulator for a direct frequency modulated signal, for example a frequency shift keying (FSK) signal used in a quasi-synchronous signalling system such as paging.

Direct frequency modulation is a convenient and commonly used form of modulation. In a conventional superheterodyne receiver a direct frequency modulated signal is easily demodulated by a phase lock loop or a pair of bandpass filters having central frequencies located at the deviation frequency on either side of the carrier frequency. A disadvantage of superheterodyne receivers is that they produce a spurious image response which can be removed by R.F. filtering. However the provision of R.F. filtering means that the receiver circuit is unsuitable for fabrication by integration which is desirable for a low cost and low power consuming receiver such as a pager. Direct conversion or zero I.F. receivers are more suitable for fabrication by integration but cannot use conventional demodulators.

British Patent Specification 1,127,451 discloses a frequency-shift detection circuit for carrier shift telegraphy. The circuit comprises first and second switching modulators both of which receive an input signal and a local oscillator signal which in the case of the second switching modulator lags by $90^\circ$ the local oscillator signal applied to the first switching modulator. The output from the first switching modulator is advanced in phase by $90^\circ$ and applied to an input of a signal combining network. The output of the second switching modulator, which output lags the phase advanced output of the first switching modulator by $180^\circ$, is applied to another input of the signal combining network. In the combining network the applied signals undergo additive or subtractive combination. Low pass filters are connected to the respective outputs to pass the deviation frequency and reject the higher frequencies present in the combined signals.    The decoding of demodulated telegraphic signals may be done by using one or other or both the outputs from the combining circuit. Such a simple circuit operates satisfactorily at low bit rates up to a maximum bit rate of half the deviation frequency but is not suitable for use with higher bit rate signals.

British Patent Specification 2,101,821A discloses a radio receiver for frequency shift keyed (FSK) signals of the zero IF type.    The quadrature outputs of a pair of mixers are low-pass filtered and a $90^{\circ}$ phase shift at the baseband frequency is introduced in one signal path.    These baseband signals are then fully limited and are applied to a logic network, for example an exclusive-OR gate, to provide a digital output indicative of the lead/lag condition of the two signal paths.    This particular receiver is only able to handle a low rate of signalling because of limitations on the switching speed of the exclusive-OR gate also there are constraints in the operation of the limiting amplifiers.    In order to overcome these limitations in using a logic network to resolve the condition in the two signal paths, Figures 3 and 5 of this specification suggest duplicating the signal paths and having a $45^{\circ}$ phase difference between the signals in one pair of paths and the signals in the duplicate pair of paths.

It is an object of the present invention to provide a data demodulator which is capable of demodulating high bit rate signals without using the logic network of the prior art and which is suitable for fabrication by integration.

According to the present invention there is provided a data demodulator for a direct frequency modulated signal, comprising means providing a positive frequency filter and a negative frequency filter, said filters each having a pass band that includes the modulus of the deviation frequency and providing outputs with two different phases for the positive frequency and two different phases for the negative frequency

and means for comparing the signal strength in the outputs of the positive and negative frequency filters to provide a data output.

In an embodiment of a data demodulator in accordance with the present invention the means providing the positive and negative frequency filters comprise first and second quadrature mixers, first filter means coupled to the output of the first mixer for providing first and second outputs having a relative phase shift of $90^{\circ}$ therebetween, second filter means coupled to the output of the second mixer for providing third and fourth outputs having a relative phase shift of $90^{\circ}$ therebetween, the first and fourth outputs and the second and third outputs comprising in-phase or anti-phase pairs of outputs, first summing means for summing the first and fourth outputs, first differencing means for producing the difference of the second and third outputs, the first summing means and the first differencing means providing outputs for the positive input frequencies, second summing means for summing the second and third outputs, and second differencing means for producing the difference of the first and fourth outputs, the second summing means and the second differencing means providing outputs for the negative input frequencies. An advantage of maintaining a quadrature relationship between the first and second outputs and between the third and fourth outputs is that the data demodulator can operate over a wider frequency range than would otherwise be possible.

The means for comparing the signal strength in the outputs of the positive and negative frequency filters may include amplitude detectors for detecting the amplitudes of output signals from the first and second summing means and the first and second differencing means and a difference amplifier. Such amplitude detectors may comprise full wave rectifiers. By summing the outputs of pairs of the full wave rectifiers handling the same signal, that is the positive or negative frequency signal, one can obtain outputs which do not go to zero thus enabling the data demodulator to operate at high bit rates. An advantage of not allowing the outputs to fall to zero is that less severe smoothing is necessary compared to the case where the outputs do fall to zero. In fact in some applications smoothing may be omitted altogether.

The present invention will now be described, by way of example, with reference to the accompanying drawings, wherein:

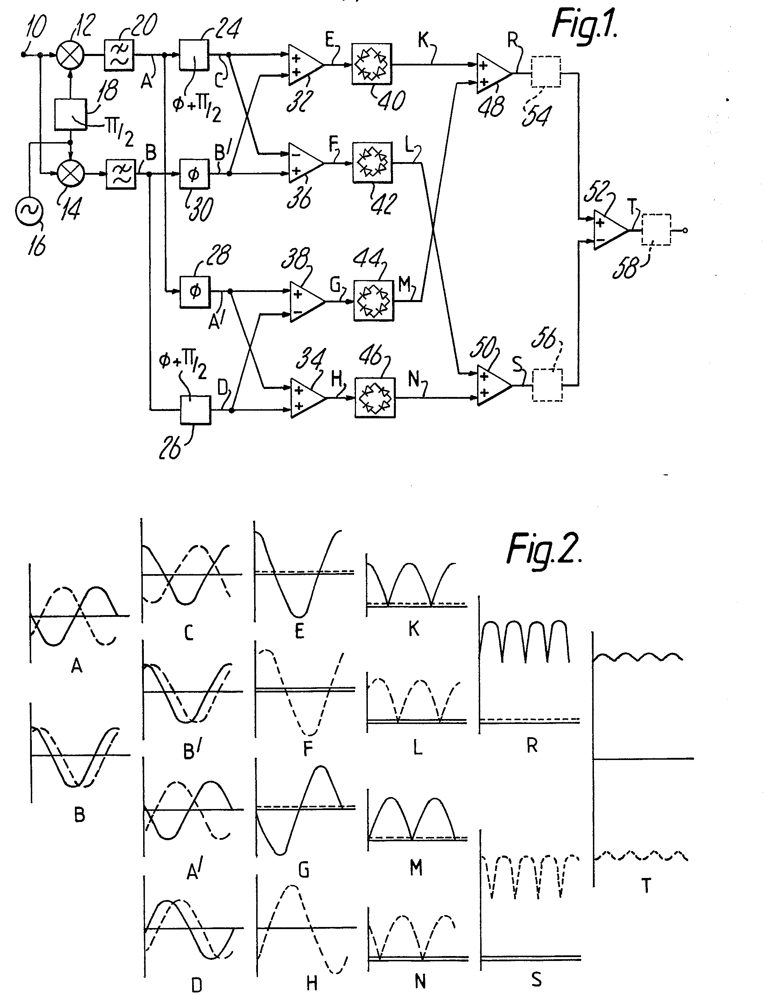

Figure 1 is a block schematic circuit diagram of an embodiment of a data demodulator made in accordance with the present invention, and

Figure 2 shows the waveforms occurring at different points in the circuit illustrated in Figure 1. The waveforms shown by continuous lines relate to a deviation frequency $+\triangle f$ greater than the carrier frequency $f_c$, that is $f_c + \triangle f$, and those shown by broken lines to a deviation frequency $-\triangle f$ lower than the carrier frequency $f_c$, that is $f_c - \triangle f$. With respect to baseband signalling $+\triangle f > 0$ and $-\triangle f < 0$. The difference in time between the waveforms is purely arbitrary. Also it should be realised that at any instant only one of the deviation frequency signals will be present depending on the data being transmitted.

The data demodulator shown in Figure 1 comprises an input terminal 10 which is connected to respective first inputs of mixers 12, 14. A local oscillator 16 having the same frequency, $f_c$, as the carrier frequency is connected to the second input of the mixer 14 and, _via_ a quadrature phase shifter 18, to a second input of the mixer 12. Low pass filters 20, 22 connected to the outputs of the mixers 12, 14, respectively, select the difference signals in the baseband outputs of the mixers 12, 14. These difference signals are shown by the waveforms A and B in Figure 2. The combined effect of the quadrature mixers 12, 14 and the phase shifter 18 is to produce a pair of signals such that in the case of $\triangle f > 0$ the waveform A leads the waveform B by $90^o$ but in the case of $\triangle f < 0$ the waveform A lags the waveform B by $90^o$.

The waveforms A and B are applied to quadrature phase shifting stages 24, 26 which produce the outputs illustrated by the waveforms C and D. If necessary the phase of the waveforms A and B can be adjusted using phase shifting stages 28, 30, the outputs of which are shown by waveforms A' and B', to achieve quadrature between the outputs 24 and 28 and between 26 and 30 over a wider range of frequencies. By adding the outputs of the stages 24, 30 and the outputs of the stages 26, 28 in summing amplifier circuits 32, 34 and taking the difference of the outputs of the stages 24, 30 and of the stages 26, 28 in differencing amplifier circuits 36, 38 it is possible to obtain quadrature outputs corresponding to the signals $\overset{+}{-}\triangle f$ above and below the local oscillator 16 frequency, waveforms E, F, G and H. In explanation, by applying a further $90^o$ (or $\pi/2$) phase shift to the signals from the low pass filters 12, 14 one obtains signals which are in-phase or anti-phase. If anti-phase signals are added together in one or other of the circuits 32, 34 then the output would be zero since the signals cancel each other. Alternatively if anti-phase signals are subtracted from each other in one or other of the circuits 36, 38 then one obtains a high output signal. In the case of adding in-phase signals one obtains a high output whereas by subtracting in-phase signals one obtains a zero output. It should be noted in respect of the differencing amplifier circuits 36, 38 that the $90^{\circ}$ phase shifted signals, that is the waveforms C and D, are applied to the negative (or inverting) inputs. The waveforms E, F, G and H are then amplitude or envelope detected by, for example, full wave rectifiers 40, 42, 44, 46 coupled respectively to the outputs of the circuits 32, 36, 38, 34. The outputs of the full wave rectifiers 40, 42, 44 and 46 are illustrated by the waveforms K, L, M and N, respectively.

By summing the outputs of the full wave rectifiers 40, 44 in a summing amplifier 48 and summing the outputs of the full wave rectifiers 42, 46 in a summing amplifier 50, signals, waveforms R and S, are obtained which do not go to zero, unlike the respective outputs of the full wave rectifiers 40, 42, 44 and 46. The D.C. levels in the outputs of the summing circuits 48, 50 are indicative of the sign of the frequency displacement, that is $+\triangle f$ or $-\triangle f$ from the carrier frequency $f_c$ and hence the modulation. In order to recover the modulation the outputs of the summing circuits 48, 50 are subtracted from each other in a subtracting circuit 52. By subtracting the outputs of the summing circuits 48, 50 the signal strength being transmitted at the frequency $+\triangle f$ above the local oscillator frequency, $f_c$, can be compared with that $-\triangle f$ being transmitted below the local oscillator frequency, waveform T.

Optionally, smoothing by low pass filtering may be provided by filters 54, 56 connected to the inputs of the subtracting circuit 52 or a filter 58 connected to the output of the circuit 52.

By duplicating the signal processing in quadrature in the stages 26, 28, the summing amplifier circuit 34, the differencing amplifier circuit 38 and the full wave rectifiers 44, 46 and summing the full wave rectified signals in the summing circuits 48, 50 the data rate can be increased by up to twice the deviation frequency compared to around half of the deviation frequency $\angle$ f when not duplicating the signal processing. Additionally the signal-to-noise ratio is improved due to an increased openness of the "eye" diagram.

Although one embodiment of the invention has been described and illustrated with reference to the drawings, other embodiments of the invention are possible. For example, any means of forming positive $+\triangle$f and negative $-\triangle$f frequency filters with quadrature phase outputs can be used, for example polyphase filters, the different phase outputs being applied to the respective full wave rectifiers 40, 42, 44 and 46.

Because the data demodulator operates at baseband then there is no requirement for R.F. filters which means that the demodulator can be fabricated by integrated circuit techniques.

Further, if the data demodulator in accordance with the present invention is incorporated into a receiver then the low pass filters 20 and 22 can be used to do channel selectivity, that is to remove the adjacent channel.

0098665

CLAIMS

1.    A data demodulator for a direct frequency modulated signal, characterised in that there are provided means providing a positive frequency filter and a negative frequency filter, said filters each having a pass band that includes the modulus of the deviation frequency and providing outputs with two different phases for the positive frequency and two different phases for the negative frequency, and means for comparing the signal strength in the outputs of the positive and negative frequency filters to provide a data output.

2.    A data demodulator as claimed in Claim 1, characterised in that the means providing the positive and negative frequency filters comprise first and second quadrature mixers, first filter means coupled to the output of the first mixer for providing first and second outputs having a relative phase shift of $90^\circ$ therebetween, second filter means coupled to the output of the second mixer for providing third and fourth outputs having a relative phase shift of $90^\circ$ therebetween, the first and fourth outputs and the second and third outputs comprising in-phase or anti-phase pairs of outputs, first summing means for summing the first and fourth outputs, first differencing means for producing the difference of the second and third outputs, the first summing means and the first differencing means providing outputs for the positive input frequencies, second summing means for summing the second and third outputs, and second differencing means for producing the difference of the first and fourth outputs, the second summing means and the second differencing means providing outputs for the negative input frequencies.

3.    A data demodulator as claimed in Claim 2, characterised in that said first and second filter means comprise polyphase filters.

4.    A data demodulator as claimed in Claim 2 or 3, characterised by amplitude detectors for detecting the amplitudes of output signals from the first and second summing means and the first and second differencing means.

5. A data demodulator as claimed in any one of Claims 1 to 4, characterised by smoothing means for smoothing the output from the comparing means.

6. A data demodulator as claimed in any one of Claims 1 to 4, characterised by smoothing means connected in the signal paths to the comparing means.

7. A direct conversion receiver including a data demodulator as claimed in any one of Claims 1 to 6.

———————

Fig.1.

0098665

Fig.2.

PHB 32894